Europäisches Patentamt

European Patent Office

Office européen des brevets

(11) Publication number: **0 492 168 A2**

# EUROPEAN PATENT APPLICATION

(21) Application number: **91120293.5**

(22) Date of filing: **27.11.91**

(51) Int. Cl.5: **F24F 3/147**

(30) Priority: **28.11.90 JP 322558/90**
**28.11.90 JP 322559/90**

(43) Date of publication of application:
**01.07.92 Bulletin 92/27**

(84) Designated Contracting States:
**DE GB IT**

(71) Applicant: **Kabushiki Kaisha Toshiba**
**72, Horikawa-cho Saiwai-ku**
**Kawasaki-shi(JP)**
Applicant: **TOSHIBA AVE CO., LTD**
**3-3-9, Shinbashi**
**Minato-ku, Tokyo(JP)**

(72) Inventor: **Saito, Kazuo**
**1-2-9, Kugenumakaigan**
**Fujisawa-shi, Kanagawa-ken(JP)**
Inventor: **Kumazawa, Katuyoshi**
**3-2-1-A-105, Yanagibashi**
**Yamato-shi, Kanagawa-ken(JP)**
Inventor: **Sano, Tetsuo**
**452 Nakazatohigashicho**
**Fujinomiya-shi, Shizuoka-ken(JP)**
Inventor: **Saito, Toshihiko**
**5-30-17-1001, Ogikubo**
**Suginami-ku, Tokyo(JP)**
Inventor: **Arai, Yasuhiro**
**2-5-1-2504-421, Shiomidai, Isogo-ku**
**Yokohama-shi, Kanagawa-ken(JP)**
Inventor: **Kameyama, Shinichi**
**10-3-206, Aoki 1-chome**
**Kawaguchi-shi, Saitama-ken(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Air-conditioning apparatus.**

(57) An air-conditioning apparatus forms a refrigerating cycle with a coolant heater (43) and a compressor (17) having two cylinders. The apparatus simultaneously carries out a coolant heating operation and a heat pump operation when a required heating capacity is high, and when the required heating capacity is low, only the heat pump operation. This operation technique helps reduce the size of the apparatus and expand a variable width of heating capacity. The apparatus also has a defrosting unit for defrosting an outdoor heat exchanger (47) during the heat pump operation.

FIG.3

## BACKGROUND OF THE INVENTION

### Field of the Invention

The present invention relates to an air-conditioning apparatus employing a coolant heater in achieving a refrigerating cycle, and particularly to a coolant heating air-conditioning apparatus employing a two-cylinder compressor.

### Description of the Prior Art

A heat pump air-conditioning apparatus usually forms a refrigerating cycle with a compressor, an indoor heat exchanger, an outdoor heat exchanger, and an expansion valve. During a heating operation, the indoor heat exchanger discharges heat out of coolant, the expansion valve reduces the pressure of the coolant, and the outdoor heat exchanger lets the coolant absorb atmospheric heat and evaporate. The evaporated coolant is sent to the compressor.

In this way, the heat pump air-conditioning apparatus lets the coolant passing through the outdoor heat exchanger absorb atmospheric heat and evaporate. When an ambient temperature is low, the apparatus is required to provide a large heating capacity. The apparatus, however, cannot increase its capacity to meet this requirement because the coolant cannot absorb much heat from atmosphere when the ambient temperature is low.

To solve this problem, a coolant heating air-conditioning apparatus has been proposed. This apparatus employs a coolant heater in addition to a heat pump refrigerating cycle, to improve the heating capacity thereof. During a heating operation, this apparatus does not use an outdoor heat exchanger but directly heats and evaporates coolant with combustion heat. The apparatus discharges the latent heat of the evaporated coolant in an indoor heat exchanger to heat a room. During a cooling operation, the apparatus carries out a usual heat pump cooling operation.

Unlike the heat pump air-conditioning apparatus, the coolant heating air-conditioning apparatus does not let the coolant absorb atmospheric heat during the heating operation, and therefore, is not required to reduce the pressure of the coolant through an expansion valve.

Fig. 1 shows a Mollier diagram in which a continuous line indicates the condition of coolant during a heating cycle of the coolant heating air-conditioning apparatus, and a dotted line indicates the condition of coolant during a heating cycle of the standard heat pump air-conditioning apparatus. The coolant heating air-conditioning apparatus has no compression process seen in the heat pump air-conditioning apparatus, so that the compressor thereof serves as a coolant gas pump.

Fig. 2 shows a refrigerating cycle of the conventional coolant heating air-conditioning apparatus.

This apparatus mainly comprises a compressor 1, a four-way valve 3, an indoor heat exchanger 5, an expansion valve 7, a check valve 9, an outdoor heat exchanger 11, a coolant heater 13, and a two-way valve 15. These elements are connected to one another through piping.

During a heating operation, coolant is circulated sequentially through the compressor 1, four-way valve 3, indoor heat exchanger 5, expansion valve 7, two-way valve 15, coolant heater 13, and compressor 1. The expansion valve 7 is widely opened to substantially cause no pressure loss, and the outdoor heat exchanger 11 receives no coolant.

During a cooling operation, the coolant is circulated sequentially through the compressor 1, four-way valve 3, outdoor heat exchanger 11, check valve 9, expansion valve 7, indoor heat exchanger 5, four-way valve 3, and compressor 1. The two-way valve 15 is closed to supply no coolant to the coolant heater 13.

The heating capacity of this coolant heating air-conditioning apparatus is equal to the combustion capacity of a burner of the coolant heater 13 multiplied by the thermal efficiency of the coolant heater 13. Namely, the heating capacity of the apparatus cannot be adjusted beyond the capacity of the coolant heater 13. The capacity of the burner of the coolant heater 13 is usually adjustable at a ratio of 1:3, i.e., at a minimum value of 1 to a maximum value of 3. Namely, the variable width of the heating capacity of this apparatus is 1:3.

When a required heating load is small, the variable width of the heating capacity must be supplemented by an ON/OFF operation, which deteriorates a comfortable heating condition. Compared with a continuous operation, the ON/OFF operation is disadvantageous in terms of a running cost and the durability of the burner. In particular, the ON/OFF operation causes combustion gases to condense in a heat exchanger of the coolant heater 13 and corrode the heat exchanger due to high acidity of the combustion gases.

To avoid the ON/OFF operation and achieve continuous heating, the air-conditioning apparatus must have a variable width of capacity of about 1:10.

When the heating operation is continued for a long time, the coolant gradually leaks into the outdoor heat exchanger 11 which is not in use during the heating operation, and stays therein under a liquified state. This may cause a shortage of the coolant in the heating cycle. To avoid the shortage, the heating operation must be stopped to collect the leaked coolant. In addition, the coolant must be collected at the start of the heating operation. This may elongate a start-up time of the heating operation.

Since the coolant heater 13 is solely used without the outdoor heat exchanger 11 during the heating operation, the coolant heater 13 must have a larger capacity than in the simultaneous use of the coolant heater 13 and outdoor heat exchanger 11. This ineffective use of the outdoor heat exchanger 11 increases the size of the equipment.

When the coolant heater 13 uses kerosene as a fuel, the kerosene is stored in a tank, and when the kerosene in the tank is completely consumed, the heating operation is naturally stopped.

When the outdoor heat exchanger 11 is used as a heat pump for carrying out the heating operation, the outdoor heat exchanger 11 may be frosted depending on ambient conditions. In this case, the outdoor heat exchanger 11 must be defrosted by directly supplying high-temperature gasified coolant from the compressor 1 to the outdoor heat exchanger 11 through the four-way valve 3. Then, the high-temperature gasified coolant is not supplied to the indoor heat exchanger 5. Namely, the heating operation must be temporarily stopped during the defrosting operation, and therefore, a user may not feel comfortable warmth during this period.

When operated in a cold district, the heat pump operation and coolant heating operation may be simultaneously carried out. In this case, the quantity of heat supplied to the indoor heat exchanger by the coolant heating operation is approximately four times larger than that by the heat pump operation. Accordingly, in a conventional two compressor system, the quantity of coolant discharged from a compressor for the heat pump operation is smaller than that from a compressor for the coolant heating operation. Since lubricant is evenly contained in the coolant fed to the compressors, the compressor for the heat pump operation with a smaller discharge of coolant may hold the coolant and lubricant, while the compressor for the coolant heating operation with a larger discharge of coolant may cause a shortage of the coolant and lubricant.

## SUMMARY OF THE INVENTION

To solve these problems of the prior arts, an object of the invention is to provide an air-conditioning apparatus employing a combination of a coolant heating method and a heat pump method, to achieve a wide variable width of heating capacity for sufficiently covering a low range of heating load.

Another object of the invention is to provide an air-conditioning apparatus that can be continuously operated without stopping a heating operation during defrosting.

In order to accomplish the objects, a first aspect of the present invention provides an air-conditioning apparatus comprising a compressor having two suction ports, a discharge port, and two simultaneously operating cylinders corresponding to the two suction ports; an indoor heat exchanger; an outdoor heat exchanger; a directional control valve for connecting the indoor and outdoor heat exchangers with the discharge port and one of the suction ports of the compressor; an expansion valve disposed in piping for connecting the indoor heat exchanger with the outdoor heat exchanger; a coolant heater disposed between the piping and the other suction port of the compressor; and an open/close valve means disposed between the coolant heater and the piping.

According to this arrangement, the open/close valve means is opened when a required heating capacity is high. In this case, coolant flows through both the coolant heater and outdoor heat exchanger, to simultaneously achieve a coolant heating operation and a heat pump operation. When the required heating capacity is low, the open/close valve means is closed. Then, the coolant does not flow through the coolant heater but flows only through the outdoor heat exchanger to achieve only the heat pump operation. This arrangement expands a variable width of heating capacity of the apparatus. The two-cylinder compressor system employed in this arrangement is compact, inexpensive, and well-balanced, has a small demand of electricity, causes little vibration and noise, and does not hold lubricant.

A second aspect of the invention provides an air-conditioning apparatus comprising a compressor having two suction ports, a discharge port, and two simultaneously operating cylinders corresponding to the two suction ports; an indoor heat exchanger; an outdoor heat exchanger; a directional control valve for connecting the indoor and outdoor heat exchangers with the discharge port and one of the suction ports of the compressor; an expansion valve disposed in piping for connecting the indoor heat exchanger with the outdoor heat exchanger; a coolant heater disposed between an intermediate position in the piping between the expansion valve and the indoor heat exchanger and the other suction port of the compressor; an open/close valve means disposed between the coolant heater and the piping; a flow control valve disposed between a connection of the open/close valve means to the piping and the indoor heat exchanger; and a bypassing open/close valve means disposed in parallel with the expansion valve.

With this arrangement, a coolant heating operation and a heat pump operation are simultaneously carried out when a required heating capacity is high. In this case, the open/close valve means is opened, while the bypassing open/close valve arranged in parallel with the expansion valve is closed. At this time, the flow control valve mainly adjusts the flow rate of coolant to the coolant heater. On the other hand, when the required heating capacity is low or when a cooling operation is required, only the heat pump operation is carried out. In this case, the open/close valve means is closed, the bypassing open/close valve opened, and the opening of the flow control valve is contracted. At this time, the flow control valve serves as an expansion valve. In this way, the different expansion valves are used for the two operating conditions, to deal with different coolant flow rates. This stabilizes an air-conditioning cycle and realizes a wide variable width of capacity.

A third aspect of the invention provides an air-conditioning apparatus comprising a compressor having two suction ports, a discharge port, and two simultaneously operating cylinders corresponding to the two suction ports; an indoor heat exchanger; an outdoor heat exchanger; a directional control valve for connecting the indoor and outdoor heat exchangers with the discharge port and one of the suction ports of the compressor; an expansion valve disposed in piping for connecting the indoor heat exchanger with the outdoor heat exchanger; a coolant heater disposed between the piping and the other suction port of the compressor; a first open/close valve means disposed between the coolant heater and the piping; and a second open/close valve means disposed between two piping systems connected to the two suction ports, respectively.

With this arrangement, the first open/close valve means is opened while the second open/close valve means is closed when a required heating capacity is high. In this case, coolant flows through both the coolant heater and outdoor heat exchanger, to simultaneously achieve a coolant heating operation and a heat pump operation. On the other hand, when the required heating capacity is low, the first and second open/close valve means are both closed. In this case, the coolant does not flow to the coolant heater but flows to the outdoor heat exchanger to achieve the heat pump operation in which the coolant is sucked through one of the suction ports of the compressor. This realizes a very wide variable width of capacity that sufficiently covers a low heating load.

A fourth aspect of the invention provides an air-conditioning apparatus comprising a compressor having two suction ports, a discharge port, and two simultaneously operating cylinders corresponding to the two suction ports; an indoor heat exchanger; an outdoor heat exchanger; a directional control valve for connecting the indoor and outdoor heat exchangers with the discharge port and one of the suction ports of the compressor; an expansion valve disposed in piping for connecting the indoor heat exchanger with the outdoor heat exchanger; a coolant heater disposed between the piping and the other suction port of the compressor; a first open/close valve means disposed between the coolant heater and the piping; and a second open/close valve means disposed in bypass piping for connecting piping connected to the other suction port with the piping connected to the expansion valve side of the outdoor heat exchanger.

With this arrangement, a heating operation is carried out by opening the first open/close valve means. In this case, coolant exiting from the indoor heat exchanger flows through both the coolant heater and outdoor heat exchanger, to simultaneously achieve a coolant heating operation and a heat pump operation. When the first open/close valve means is closed during the heating operation, the coolant exiting from the indoor heat exchanger does not flow to the coolant heater but flows to the outdoor heat exchanger, to achieve only the heat pump operation. When the outdoor heat exchanger is frosted during the heat pump operation, the second open/close valve means is opened, and if the heat pump operation is solely carried out, the first open/close valve means is also opened. As a result, evaporated coolant of high temperature exiting from the coolant heater passes through the bypass piping in which the opened second open/close valve means is disposed, to reach and defrost the outdoor heat exchanger. For the defrosting operation, only the second open/close valve means is opened, and the directional control valve is not operated so that the heating operation may be continued.

A fifth aspect of the invention provides an air-conditioning apparatus comprising a compressor having two suction ports, a discharge port, and two simultaneously operating cylinders corresponding to the two discharge ports; an indoor heat exchanger; an outdoor heat exchanger; a directional control valve for connecting the indoor and outdoor heat exchangers with the discharge port and one of the suction ports of the compressor; an expansion valve disposed in piping for connecting the indoor heat exchanger with the outdoor heat exchanger; a coolant heater disposed between the piping and the other suction port of the compressor; a first open/close valve means disposed between the coolant heater and the piping; and a second open/close valve means disposed in bypass piping for connecting piping connected to the discharge port of the compressor with the piping connected to the expansion valve side of the outdoor heat exchanger.

With this arrangement, the first open/close valve means is opened during a heating operation. In this case, coolant exiting from the indoor heat exchanger flows through both the coolant heater and outdoor heat exchanger, to simultaneously achieve a coolant heating operation and a heat pump operation. When the first open/close valve means is closed during the heating operation, the coolant exiting from the indoor heat exchanger does not flow to the coolant heater but flows to the outdoor heat exchanger to achieve only the heat pump operation. When the outdoor heat exchanger is frosted during the heat pump operation, the second open/close valve means is opened, so that evaporated coolant of high temperature exiting from the compressor passes through the bypass piping in which the opened second pen/close valve means is disposed, to reach and defrost the outdoor heat exchanger. This defrosting is achieved only by opening the second open/close valve means. Since the directional control valve is not operated at this time, the heating operation is continued.

A sixth aspect of the invention provides an air-conditioning apparatus comprising a compressor having two suction ports, a discharge port, and two simultaneously operating cylinders corresponding to the two suction ports; an indoor heat exchanger; an outdoor heat exchanger; a directional control valve for connecting the indoor and outdoor heat exchangers with the discharge port and one of the suction ports of the compressor; an expansion valve disposed in piping for connecting the indoor heat exchanger with the outdoor heat exchanger; a coolant heater disposed between an intermediate portion in the piping between the indoor heat exchanger and the expansion valve and the other suction port; a first open/close valve means disposed between the coolant heater and the piping; and a second open/close valve means and heat accumulating means disposed in bypass piping for bypassing the expansion valve.

With this arrangement, the first open/close valve means is opened during a heating operation. In this case, coolant exiting from the indoor heat exchanger passes through both the coolant heater and outdoor heat exchanger, to simultaneously achieve a coolant heating operation and a heat pump operation. When the first open/close valve means is closed during the heating operation, the coolant exiting from the indoor heat exchanger does not flow to the coolant heater but flows to the outdoor heat exchanger, to achieve only the heat pump operation. When the outdoor heat exchanger is frosted during the heat pump operation, the second open/close valve means is opened, so that the coolant exiting from the indoor heat exchanger passes through the bypass piping in which the second open/close valve means is disposed, and through the heat accumulating means. As a result, the coolant becomes a high-temperature gas, which passes through the outdoor heat exchanger to defrost the same. This defrosting process is carried out only by opening the second open/close valve means without operating the directional control valve. Accordingly, the heating operation is continued.

These and other objects, features and advantages of the present invention will be more apparent from the following detailed description of preferred embodiments in conjunction with the accompanying drawings.

BRIEF DESCRIPTION OF THE DRAWINGS

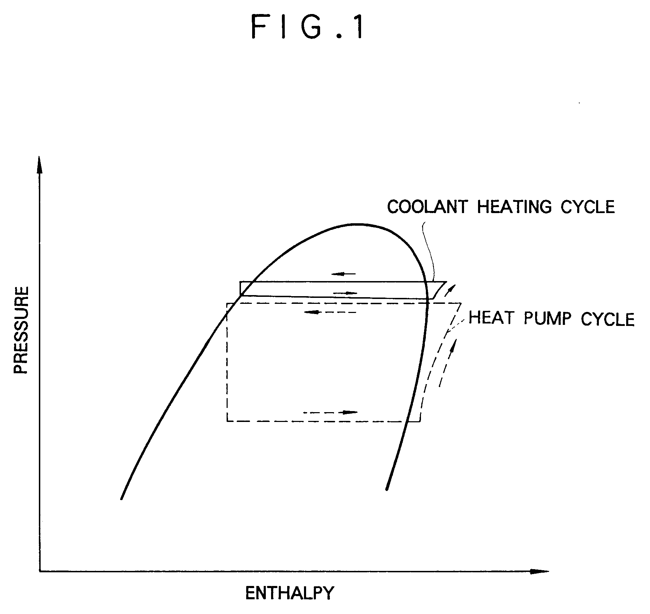

Fig. 1 is a Mollier chart showing a refrigerating cycle of a coolant heating air-conditioning apparatus according to a prior art;

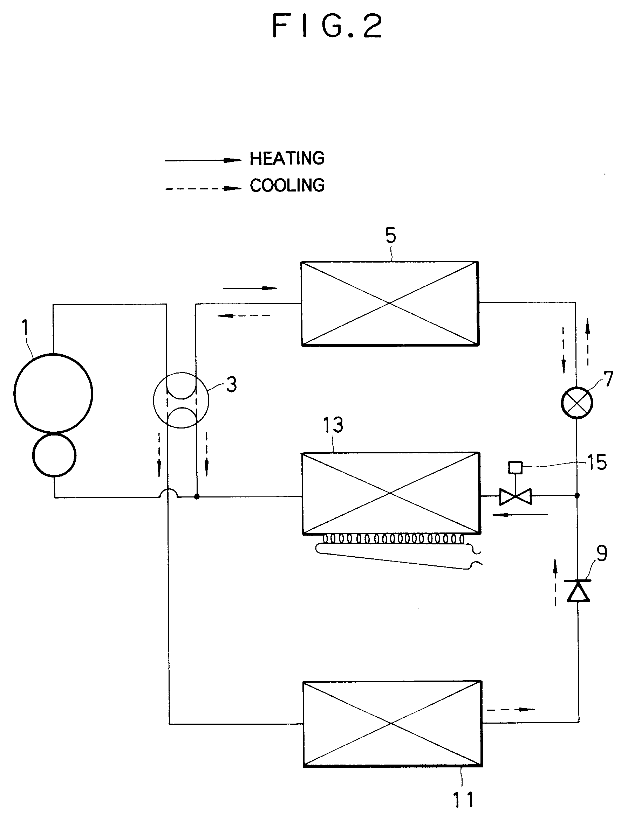

Fig. 2 is a schematic view showing a refrigerating cycle of the air-conditioning apparatus according to the prior art;

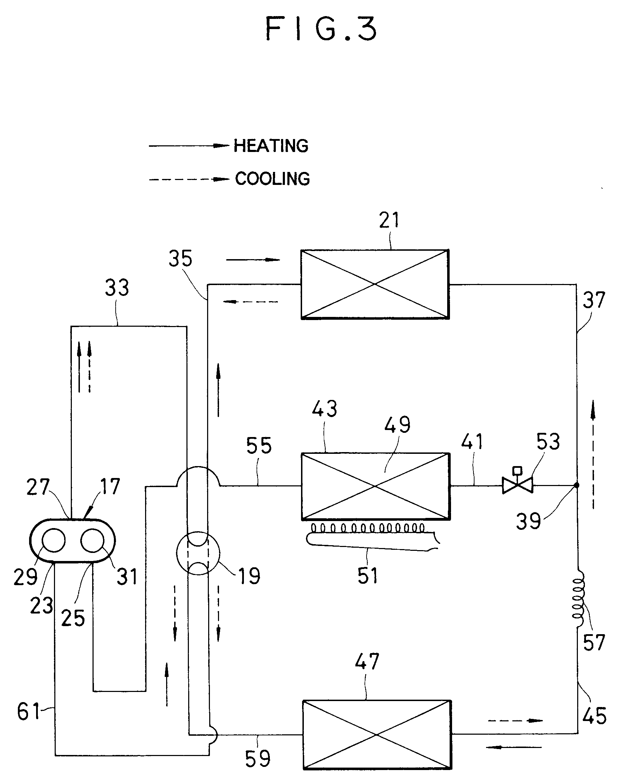

Fig. 3 is a schematic view showing a refrigerating cycle of a coolant heating air-conditioning apparatus according to a first embodiment of the invention;

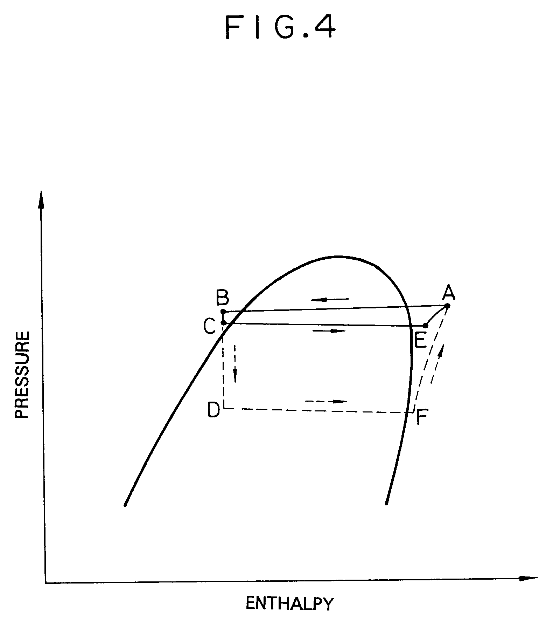

Fig. 4 is a Mollier chart showing the first embodiment of Fig. 3;

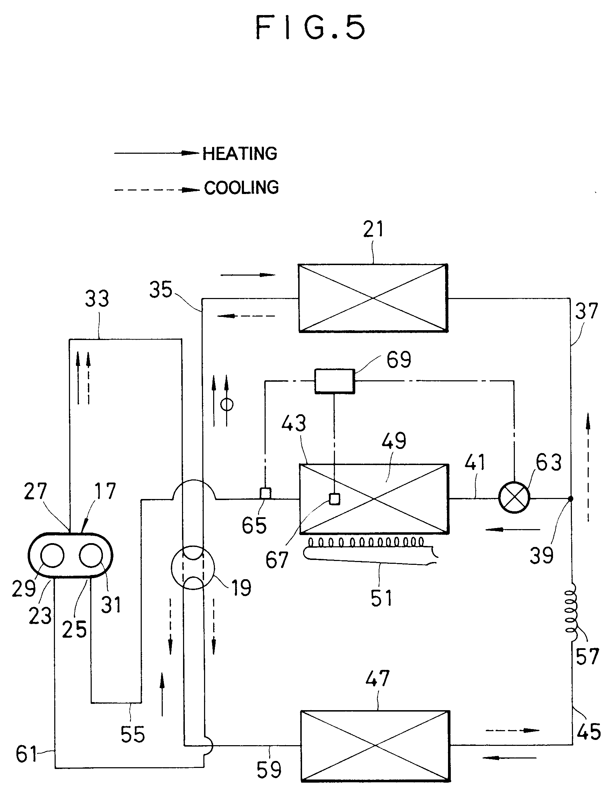

Fig. 5 is a schematic view showing a refrigerating cycle according to a second embodiment of the invention;

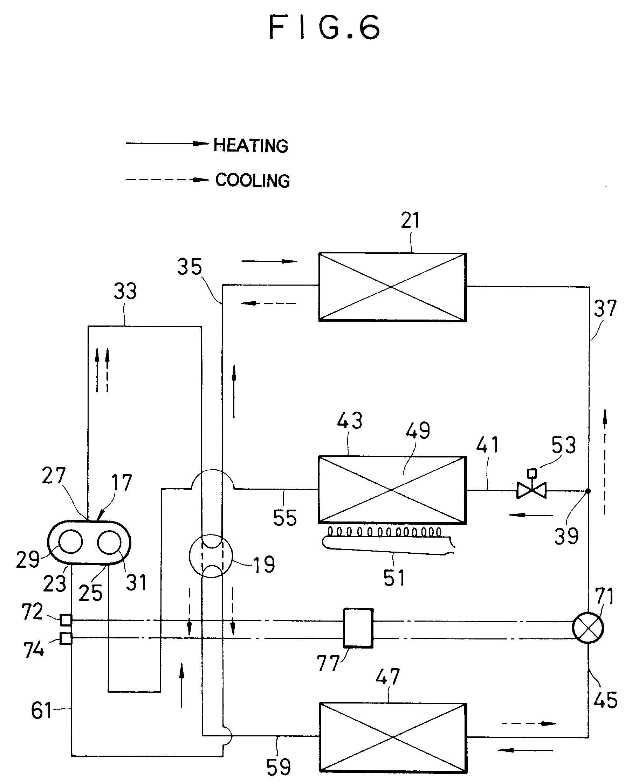

Fig. 6 is a schematic view showing a refrigerating cycle according to a third embodiment of the invention;

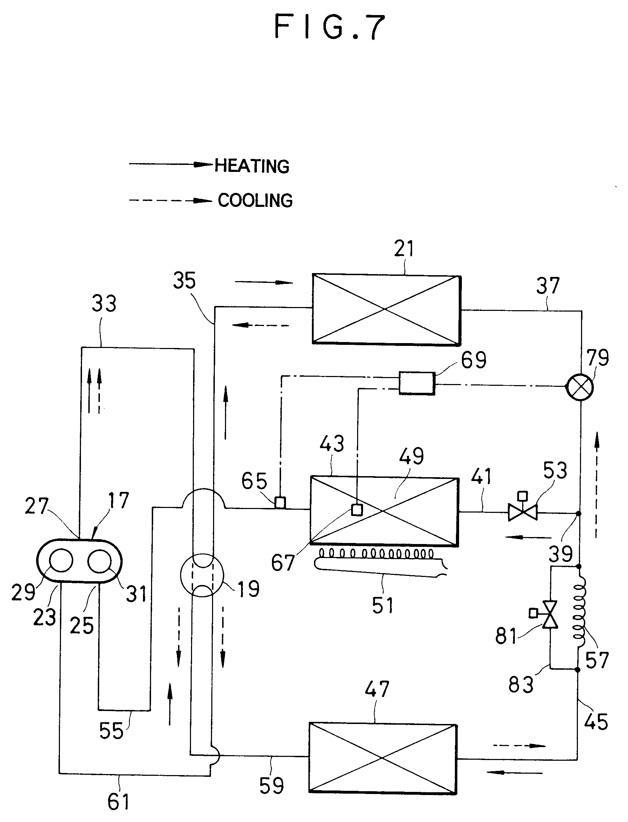

Fig. 7 is a schematic view showing a refrigerating cycle according to a fourth embodiment of the invention;

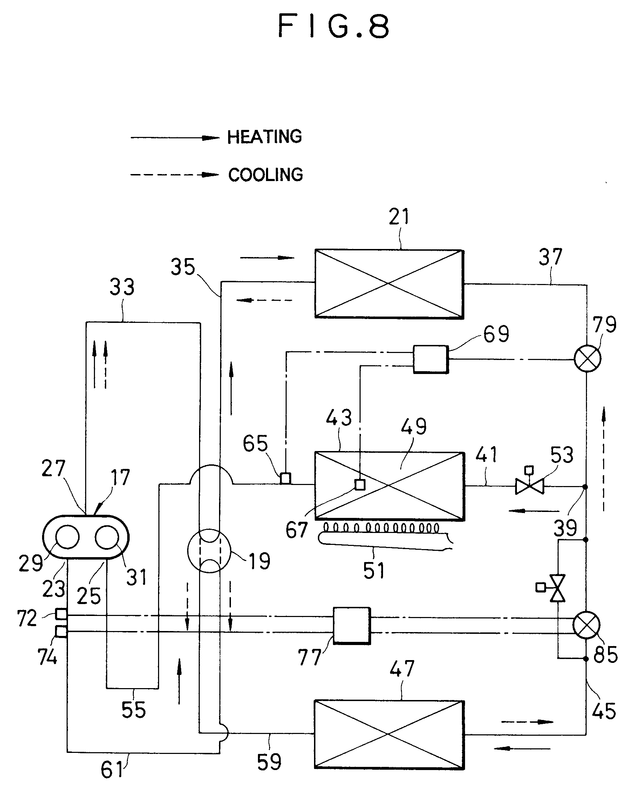

Fig. 8 is a schematic view showing a refrigerating cycle according to a fifth embodiment of the invention;

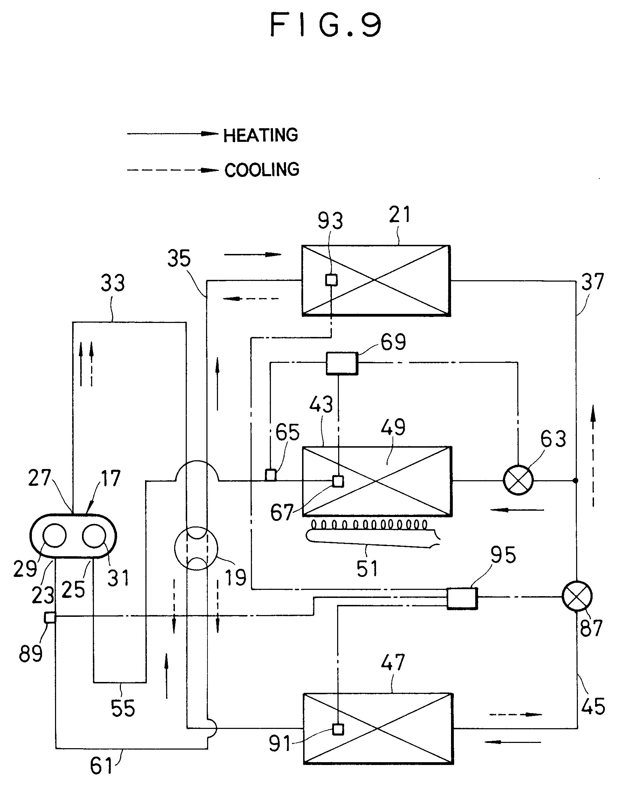

Fig. 9 is a schematic view showing a refrigerating cycle according to a sixth embodiment of the invention;

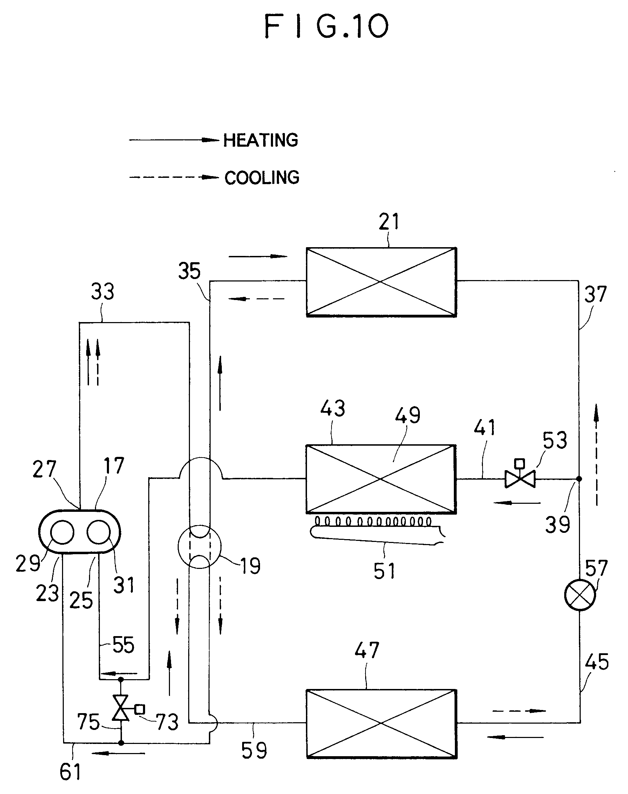

Fig. 10 is a schematic view showing a refrigerating cycle according to a seventh embodiment of the invention;

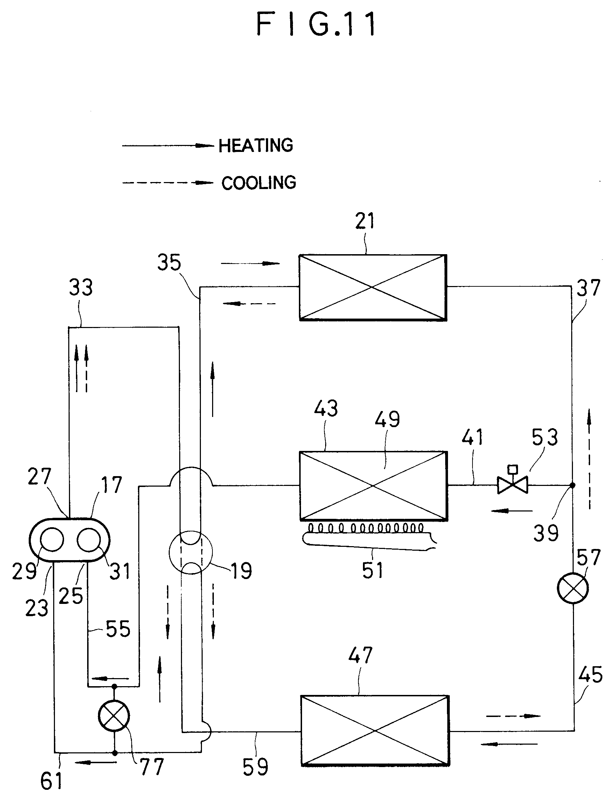

Fig. 11 is a schematic view showing a refrigerating cycle according to an eighth embodiment of the invention;

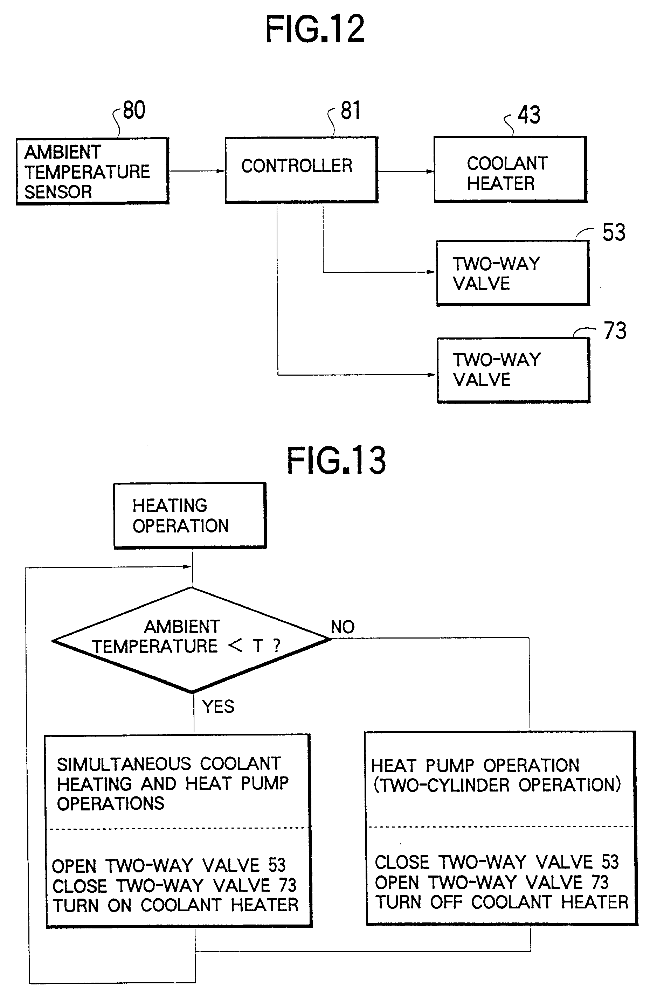

Fig. 12 is a block diagram showing an example of a heating operation control process for the refrigerating cycle of Fig. 10;
Fig. 13 is a flowchart showing the control process of Fig. 12;

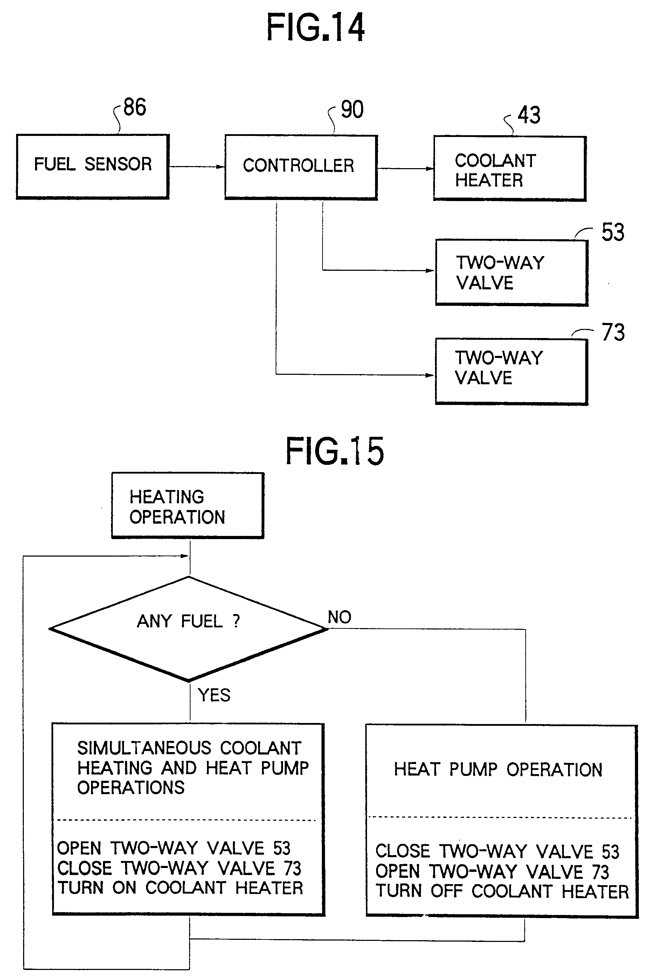

Fig. 14 is a block diagram showing another example of the heating operation control process;

Fig. 15 is a flowchart showing the control process of Fig. 14;

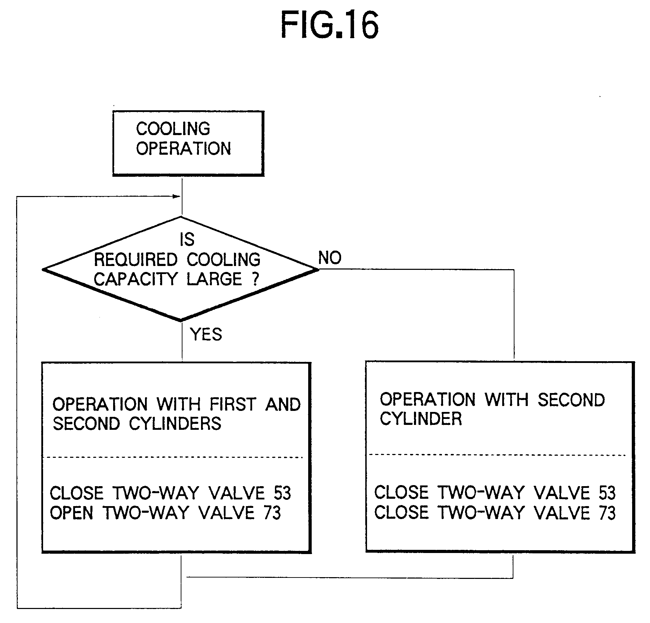

Fig. 16 is a flowchart showing an example of a cooling operation;

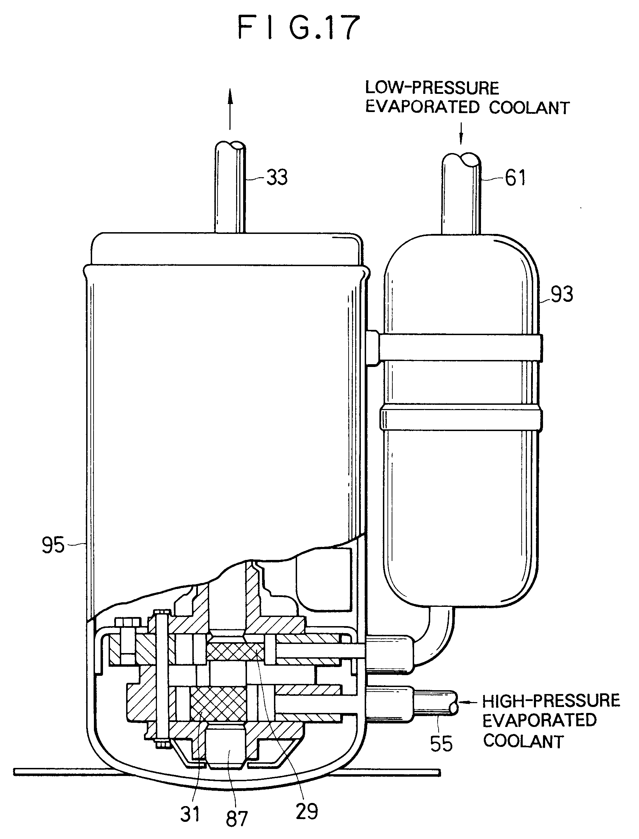

Fig. 17 is a partly broken sectional view showing an essential part of a two-cylinder compressor according to a ninth embodiment of the invention;

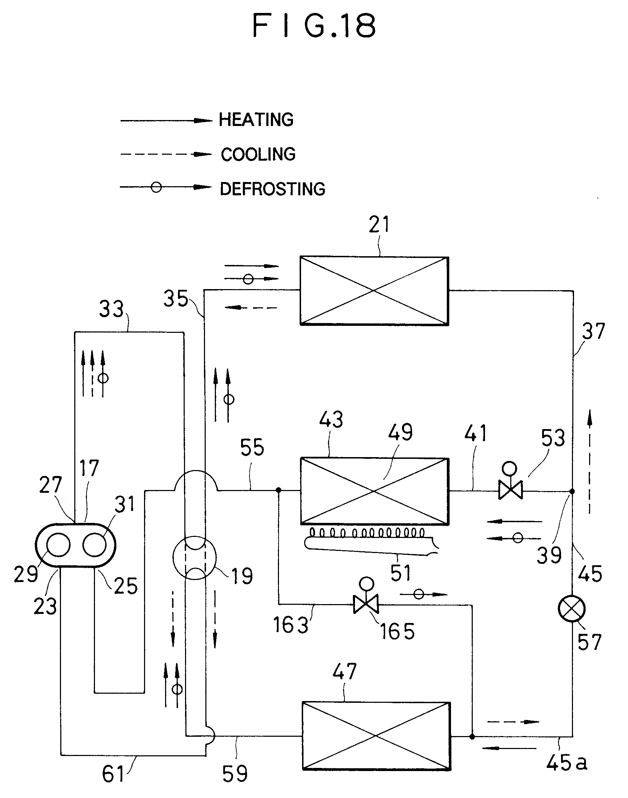

Fig. 18 is a schematic view showing a refrigerating cycle according to a tenth embodiment of the invention;

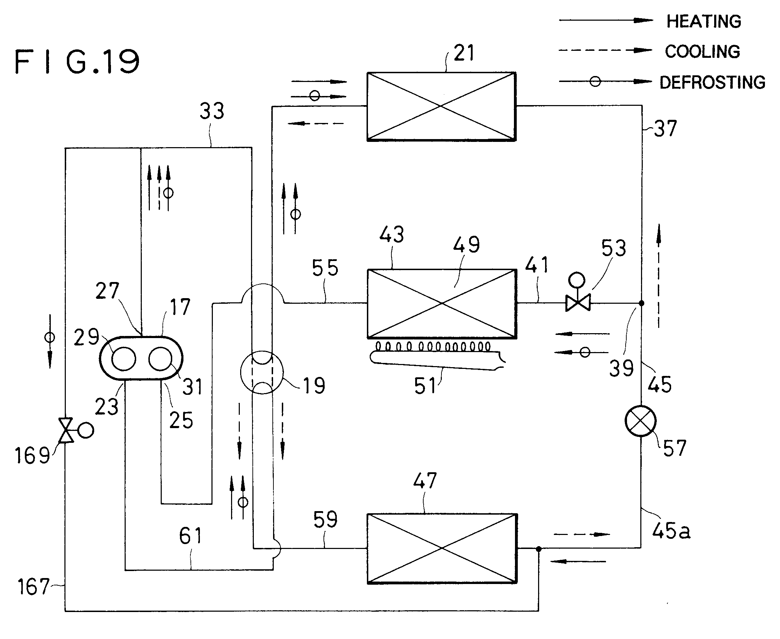

Fig. 19 is a schematic view showing a refrigerating cycle according to an eleventh embodiment of the invention;

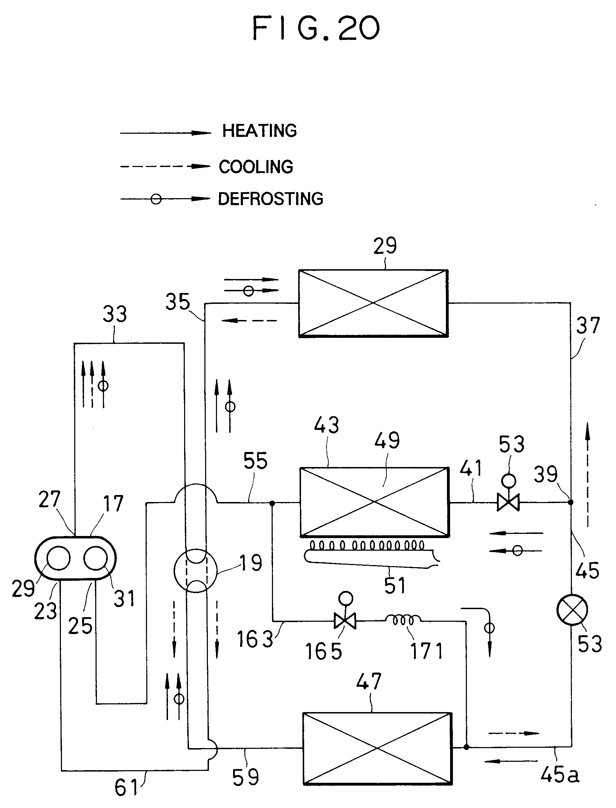

Fig. 20 is a schematic view showing a refrigerating cycle according to a twelfth embodiment of the invention;

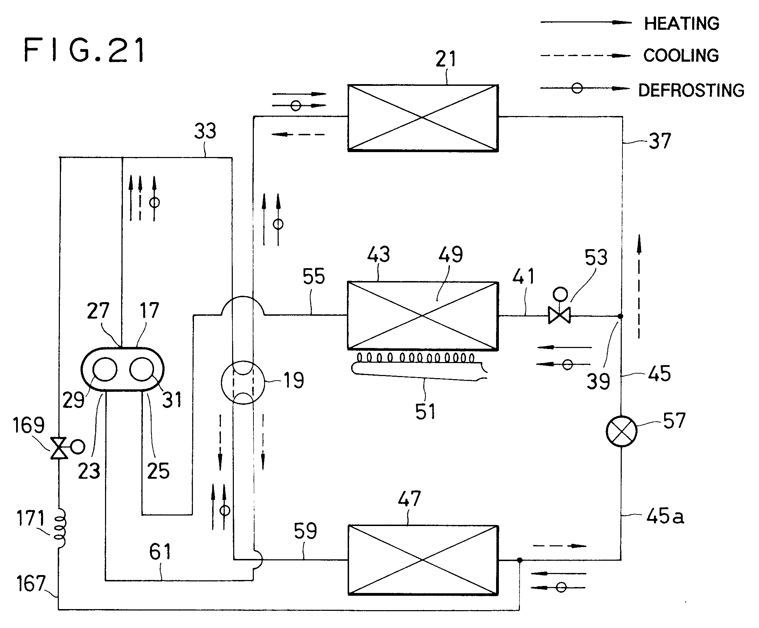

Fig. 21 is a schematic view showing a refrigerating cycle according to a thirteenth embodiment of the invention;

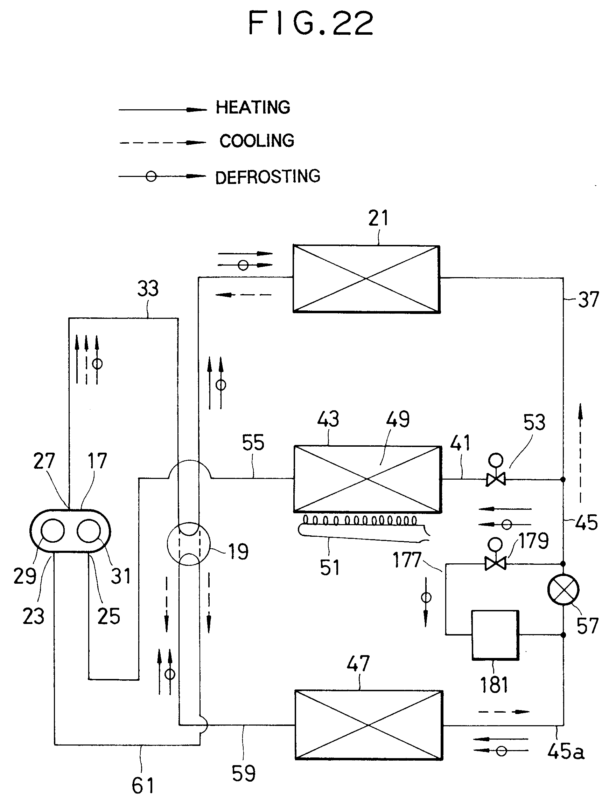

Fig. 22 shows a refrigerating cycle according to a fourteenth embodiment of the invention;

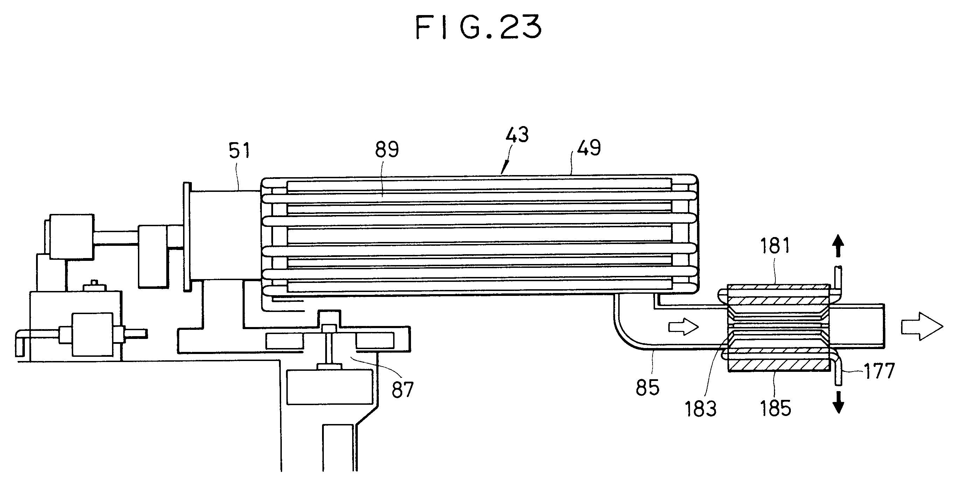

Fig. 23 is a view showing the embodiment of Fig. 22, using an exhaust from a coolant heater as a heat source for a heat accumulator; and

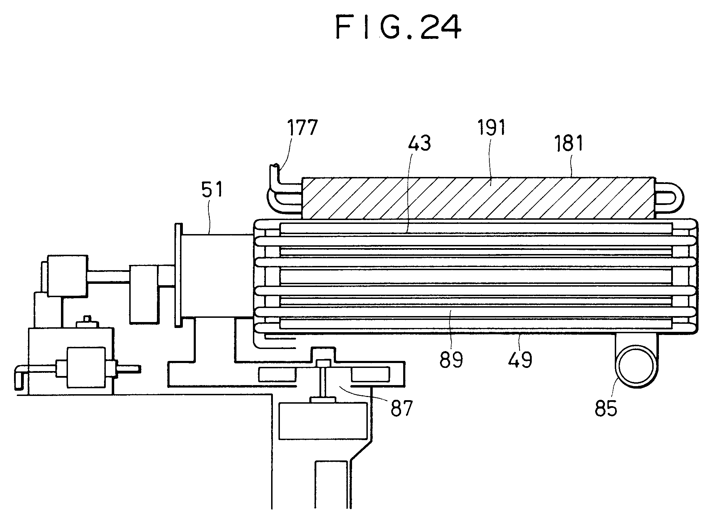

Fig. 24 is a view showing the embodiment of Fig. 22, using a coolant heater as a heat source for a heat accumulator.

## DETAILED DESCRIPTION OF THE EMBODIMENTS

Embodiments of the invention will be explained with reference to the drawings.

Fig. 3 is a schematic view showing a refrigerating cycle of an air-conditioning apparatus according to the first embodiment of the invention.

The air-conditioning apparatus comprises, in coolant flowing order during a heating operation, a two-cylinder compressor 17, a four-way valve 19 serving as a directional control valve, and an indoor heat exchanger 21. The two-cylinder compressor 17 has two suction ports 23 and 25, a discharge port 27, and first and second cylinders 29 and 31 corresponding to the two suction ports 23 and 25, respectively. The first and second cylinders 29 and 31 are simultaneously driven. The discharge port 27 of the compressor 17 is connected to the four-way valve 19 through piping 33. The four-way valve 19 is connected to the indoor heat exchanger 21 through piping 35.

Coolant from the indoor heat exchanger 21 is passed through piping 37 and divided into two flows through a branch 39. One of the two flows is guided toward a coolant heater 43 through piping 41, and the other flow toward an outdoor heat exchanger 47 through piping 45.

The coolant heater 43 comprises a coolant heater heat exchanger 49 and a burner 51.

A two-way valve 53 serving as an open/close valve is disposed in the upstream piping 41 to the coolant heater 43. The two-way valve 53 closes the coolant path to the coolant heater 43 during a heating operation carried out only with a heat pump operation of the outdoor heat exchanger 47 without using the coolant heater 43, or during a cooling operation that does not require the coolant heater 43.

The coolant exiting from the coolant heater 43 flows through piping 55, which is connected to the suction port 25 corresponding to the second cylinder 31 of the two-cylinder compressor 17.

An expansion valve 57 is disposed in the piping 45 between the branch 39 and the outdoor heat exchanger 47. The expansion valve 57 decreases the pressure of the coolant so that the coolant can absorb atmospheric heat during the heat pump operation. The expansion valve 57 may be formed from a capillary tube.

The coolant exiting from the outdoor heat exchanger 47 flows to the two-cylinder compressor 17 through the four-way valve 19. The outdoor heat exchanger 47 is connected to the four-way valve 19 through piping 59. The four-way valve 19 is connected to the suction port 23 corresponding to the first cylinder 29 of the compressor 17 through piping 61.

When a required heating capacity is large, the coolant heating operation and heat pump operation are simultaneously carried out. In this case, the two-way valve 53 is opened.

Fig. 4 is a Mollier chart showing the condition of the coolant under these operations. In the Mollier chart, the compressor 17 compresses the coolant at A, the indoor heat exchanger 21 discharges heat out of the coolant during a period of from A to B, the two-way valve 53 reduces the pressure of the coolant during a period of from B to C, the coolant heater 43 lets the coolant absorb heat during a period of from C to E, and the second cylinder 31 of the compressor 17 compresses the coolant during a period of from E to A.

In the coolant heater 43, the temperature of a combustion gas is so large there is no need to reduce the pressure of the coolant for absorbing heat. Accordingly, a segment from A to B representing the heat discharging process on the Mollier chart is close to a segment from C to E representing the heat absorbing process.

The coolant absorbs atmospheric heat in the outdoor heat exchanger 47 during a period of from D to F, and compressed in the first cylinder 29 of the compressor 17 during a period of from F to A. This is the heat pump operation for absorbing the atmospheric heat. In this heat pump operation, the segment from A to B representing the heat discharging process on the Mollier chart is spaced widely apart from a segment from D to F representing the heat absorbing process.

In this way, for providing a large heating capacity, the coolant absorbs heat not only in the coolant heater 43 but also in the outdoor heat exchanger 47. With this simultaneous heat absorption of the coolant from the two heat sources, the outdoor heat exchanger 47 is effectively utilized. compared with solely operating the coolant heater 43, the cooperative operation of the coolant heater 43 and heat pump (outdoor heat exchanger 47) can reduce the size of the coolant heater 43 for a portion of heat provided by the heat pump. As a result, the total size of the apparatus can be reduced.

When the required heating capacity is small, the two-way valve 53 is closed to stop the coolant heater 43, and only the heat pump operation with the outdoor heat exchanger 47 is carried out. As a result, a variable width of capacity for covering the low capacity heating operation is extended more than that achieved by the single operation of the coolant heater 43. Also, an overall variable width of heating capacity of the air-conditioning apparatus is also expanded.

With this extended variable width for covering the low capacity heating operation, the coolant heater 43 is not required to be repeatedly turned ON and OFF even when a required heating load is small. As a result, a user may feel comfortable warmth. Since the coolant heater 43 can be continuously operated, a running cost may be reduced compared with the ON/OFF operation. Unlike the ON/OFF operation, the continuous operation does not deteriorate the durability of the burner 51, or condense combustion gases in the heat exchanger 49 of the coolant heater 43 to corrode the heat exchanger 49 due to high acidity of the condensed combustion gases.

When the air-conditioning apparatus is operated at a low heating capacity, the two-way valve 53 is closed. During this period, the cylinders 29 and 31 of the compressor 17 are simultaneously driven, so that the heat exchanger 49 of the coolant heater 43 is substantially vacuumed by the second cylinder 31 of the compressor 17. No coolant may be condensed and held, therefore, in the heat exchanger 49. Since the outdoor heat exchanger 47 is always used, there is also no risk of holding the coolant in the outdoor heat exchanger 47.

Since no coolant is held in the heat exchanger 49 and outdoor heat exchanger 47, no shortage of the coolant occurs in the refrigerating cycle. Since there is no need of collecting leaked coolant, it is not necessary to stop the heating operation to collect the coolant. In addition, there is no need to collect the coolant when starting the heating operation, so that the start-up of the heating operation will never be delayed due to collecting the coolant.

When kerosene is used as a fuel for the coolant heater 43, the kerosene is usually stored in a tank. When the kerosene in the tank is completely consumed, the coolant heater 43 is stopped even when a high heating capacity is required, and only the outdoor heat exchanger 47 is operated to continue the heating operation.

For carrying out a cooling operation, the four-way valve 19 circulates the coolant as indicated with dotted arrow marks. During the cooling operation, the two-way valve 53 is closed, and the coolant is sequentially circulated through the four-way valve 19, outdoor heat exchanger 47, expansion valve 57, indoor heat exchange 21, four-way valve 19, and the first cylinder 29 of the two-cylinder compressor 17.

During this operation, the heat exchanger 49 of the coolant heater 43 is substantially vacuumed by the second cylinder 31 of the compressor 17, so that no coolant is condensed and held in the heat exchanger 49.

Fig. 5 shows the second embodiment of the invention. In the figure, the same parts as those of the first embodiment are represented with like reference marks, and parts essential for the second embodiment will be explained.

Instead of the two-way valve 53 of the first embodiment, the second embodiment employs a flow control valve 63, which is an electrically driven expansion valve whose opening is adjusted by a pulse motor valve.

The flow rate of circulating coolant must be changed in response to a required heating capacity. To achieve this, there are an inverter method for changing the rotational speed of the compressor 17, and a flow control valve method for controlling the flow rate of the coolant. The inverter method can widely change the flow rate of the coolant but cannot precisely adjust the same because the frequency of an inverter is usually changed in a stepwise manner. On the other hand, the flow control valve method is appropriate for precisely controlling the flow rate of the coolant.

The second embodiment employs the flow control valve 63 to precisely adjust the flow rate of coolant supplied to the coolant heater 43. Namely, the coolant heater 43 can receive a proper quantity of coolant depending on operating conditions.

The proper quantity of coolant is a quantity at which the coolant supplied to the compressor 17 from an outlet of the coolant heater 43 is provided with a proper degree of superheat an completely gasified.

To properly control the quantity of coolant in this way through the flow control valve 63, a first temperature sensor 65 for detecting the temperature of the coolant is disposed in the piping 55 at the outlet of the coolant heater 43, and a second temperature sensor 67 for detecting an evaporation temperature of the coolant is disposed in the heat exchanger 49. Also, there is arranged a controller 69 comprising a microcomputer for receiving values detected by the temperature sensors 65 and 67. According to the received values, the controller 69 calculates the proper degree of superheat of the coolant and provides an instruction to adjust the opening of the flow control valve 63.

Fig. 6 shows the third embodiment of the invention.

Instead of the expansion valve 57 made of a capillary tube of the first embodiment of Fig. 3, the third embodiment employs a reversible temperature expansion valve 71. The "reversible" valve means a valve that is applicable for both heating and cooling operations in which the flow of coolant is reversed from one to another.

A temperature sensor 72 and a pressure sensor 74 are arranged in the piping 61 to the first cylinder 29 of the two-cylinder compressor 17. A controller 77 comprising a microcomputer receives signals from the sensors 72 and 74. The controller 77 controls the temperature expansion valve 71 so that a degree of superheat of the coolant exiting from the outdoor heat exchanger 47 and entering the first cylinder 29 of the compressor 17 is constant.

This arrangement optimizes the flow rate of the coolant according to operating conditions even if a required heating capacity is greatly changed to change the flow rate of the coolant. Also, this arrangement prevents liquified coolant from flowing back into the compressor 17 and breaking the same. The third embodiment, therefore, effectively uses the heat exchanger 49 and widely changes a heating capacity.

Fig. 7 shows the fourth embodiment of the invention.

This embodiment arranges a flow control valve 79 in the piping 37 between the indoor heat exchanger 21 and the branch 39 (refer to the first embodiment of Fig. 3), and bypass piping 83 having a two-way valve 81 disposed in parallel with the expansion valve 57 and serving as a bypassing open/close valve.

Similar to the second embodiment of Fig. 5, the fourth embodiment arranges a first temperature sensor 65 at the outlet of the coolant heater 43, and a second temperature sensor 67 in the heat exchanger 49.

Values detected by the sensors 65 and 67 are received by a controller 69, which calculates a degree of superheat of coolant according to the received values and provides an instruction to adjust the opening of the flow control valve 79 when the coolant heater 43 is used.

When the coolant heating operation and heat pump operation are simultaneously carried out, the two-way valve 53 is opened, and the two-way valve 81 disposed in parallel with the expansion valve 57 is closed. In this case, the flow control valve 79 mainly adjusts the flow rate of the coolant flowing to the coolant heater 43 and causes not so much pressure loss in the coolant flow.

When the heat pump heating operation alone, or a cooling operation is carried out, the two-way valve 53 is closed, the two-way valve 81 opened, and the opening of the flow control valve 79 is contracted. In this case, the flow control valve 79 serves as an expansion valve.

When the coolant heating operation and heat pump operation are simultaneously carried out, most of the coolant flows to the coolant heater 43 and a very small quantity of the coolant to the outdoor heat exchanger 47 due to a pressure difference of the coolant between the coolant heater 43 and the outdoor heat exchanger 47.

On the other hand, during the cooling operation or the heat pump operation, a large amount of the coolant flows to the outdoor heat exchanger 47. Usually, a range of coolant quantities to be handled by the temperature expansion valve 57 is limited. When the quantity of the coolant flowing through the temperature expansion valve 57 exceeds the limit of the valve 57, the refrigerating cycle causes a hunting phenomenon, which causes abnormal overheat or a backward flow of liquified coolant into the two-cylinder compressor 17.

To handle the changing coolant quantities, the fourth embodiment uses the different expansion valves for the two operating conditions. Namely, during the simultaneous coolant heating and heat pump operations, the expansion valve 57 is used as the expansion valve with the flow control valve 79 opened, and during the cooling operation or the heat pump heating operation, the opening of the flow control valve 79 is adjusted to use the valve 79 as the expansion valve. In this way, the fourth embodiment can stabilize the refrigerating cycle and realize a wide variable width of capacity.

Fig. 8 shows the fifth embodiment of the invention.

Instead of the expansion valve 57 made of a capillary tube of the fourth embodiment of Fig. 7, the fifth embodiment employs a temperature expansion valve 85, which is not necessarily reversible, unlike the reversible temperature expansion valve 71 of the third embodiment of Fig. 6. Similar to the fourth embodiment of Fig. 7, the fifth embodiment realizes a wide variable range of capacity.

Fig. 9 shows the sixth embodiment of the invention.

Instead of the expansion valve 57 made of a capillary tube of the second embodiment of Fig. 5, the sixth embodiment employs a flow control valve 87 functioning as an expansion valve. Similar to the flow control valve 63 of the second embodiment, the flow control valve 87 is of a standard electric type.

In Fig. 9, numeral 89 denotes a temperature sensor for detecting a temperature at an inlet of the first cylinder 29 of the two-cylinder compressor 17, 91 a temperature sensor for detecting an evaporation temperature in the outdoor heat exchanger 47, and 93 a temperature sensor for detecting a temperature in the indoor heat exchanger 21.

The sensors 89, 91 and 93 provide detected values to a controller 95. The controller 95 calculates a degree of superheat of the outdoor heat exchanger 47 during a heating operation and of the indoor heat exchanger 21 during a cooling operation, according to the temperatures detected by two of the sensors, to adjust the opening of the flow control valve 87.

This embodiment provides a proper degree of superheat for each of the heat exchanges during the heating operation carried out with the simultaneous coolant heating and heat pump operations, during the heating operation carried out only with the heat pump operation, and during the cooling operation. This embodiment achieves a wide variable range of capacity.

As explained above, the invention simultaneously carries out the coolant heating operation and heat pump operation when a required heating capacity is high, and when the required heating capacity is low, only the heat pump operation for ensuring a low heating capacity range. This widens a variable range of capacity and provides a user with comfortable air-conditioning.

For achieving a high heating capacity, the invention simultaneously carries out the coolant heating operation and heat pump operation, thereby effectively using the outdoor heat exchanger, reducing the size of the coolant heater, and saving the overall size of the apparatus.

The invention always uses the outdoor heat exchanger not only during the cooling operation but also during the heating operation. As a result, coolant never stays in the outdoor heat exchanger, a shortage of the coolant in the refrigerating cycle never occurs, the troublesome coolant collecting work is eliminated, and a start-up time of the heating operation is shortened.

When simultaneously carrying out the coolant heating operation and heat pump operation, the invention opens the open/close valve and closes the bypassing open/close valve disposed in parallel with the expansion valve. In this case, the flow control valve disposed on the coolant outlet side of the indoor heat exchanger mainly adjusts the flow rate of the coolant flowing to the coolant heater during the heating operation.

On the other hand, when carrying out only the heat pump operation or the cooling operation, the invention closes the open/close valve, opens the bypassing open/close valve, and contracts the opening of the flow control valve. In this case, the flow control valve functions as an expansion valve.

In this way, the invention uses the different expansion valves for the two operating conditions, to deal with changes in the flow rate of coolant. This technique stabilizes the refrigerating cycle and widens a variable range of capacity.

Fig. 10 is a schematic view showing a refrigerating cycle of an air-conditioning apparatus according to the seventh embodiment of the invention.

The air-conditioning apparatus comprises, in coolant flowing order during a heating operation, a two-cylinder compressor 17, a four-way valve 19 serving as a directional control valve, and an indoor heat exchanger 21. The two-cylinder compressor 17 has two suction ports 23 an 25, a discharge port 27, and first and second cylinders 29 and 31 corresponding to the two suction ports 23 and 25, respectively. The first and second cylinders 29 and 31 are simultaneously driven. The discharge port 27 of the compressor 17 is connected to the four-way valve 19 through piping 33. The four-way valve 19 is connected to the indoor heat exchanger 21 through piping 35.

Coolant exiting from the indoor heat exchanger 21 is passed through piping 37 and divided into two flows through a branch 39. One of the two flows is guided toward a coolant heater 43 through piping 41, and the other flow toward an outdoor heat exchanger 47 through piping 45.

The coolant heater 43 comprises a coolant heater, heat exchanger 49 and a burner 51.

A two-way valve 53 serving as an open/close valve is disposed in the piping 41 to the coolant heater 43. The two-way valve 53 closes the coolant path to the coolant heater 43 during a single heat pump heating operation carried out by the outdoor heat exchanger 47 without using the coolant heater 43, or during a cooling operation that does not require the coolant heater 43.

The coolant exiting from the coolant heater 43 flows through piping 55, which is connected to the suction port 25 corresponding to the second cylinder 31 of the two-cylinder compressor 17.

An expansion valve 57 is disposed in the piping 45 between the branch 39 and the outdoor heat exchanger 47. The expansion valve 57 decreases the pressure of coolant so that the coolant can absorb atmospheric heat during the heat pump operation. The expansion valve 57 may be formed from a capillary tube.

The coolant exiting from the outdoor heat exchanger 47 flows to the two-cylinder compressor 17 through the four-way valve 19. The outdoor heat exchanger 47 is connected to the four-way valve 19 through piping 59. The four-way valve 19 is connected to the suction port 23 corresponding to the first cylinder 29 of the compressor 17 through piping 61. The piping 61 is connected to the piping 55 through piping 75 in which a two-way valve 73 serving as a second open/close valve is disposed.

When a large heating capacity is required, the coolant heating operation and heat pump operation are simultaneously carried out. In this case, the two-way valve 53 on the upstream side of the coolant heater 43 is opened, and the two-way valve 73 on the upstream side of the two-cylinder compressor 17 is closed. Accordingly, separate parallel flows of coolant pass through the high-pressure coolant heater 43 and the low pressure outdoor heat exchanger 47, and absorb combustion heat and atmospheric heat, respectively.

In this way, for providing a large heating capacity, the coolant absorbs not only combustion heat in the coolant heater 43 but also atmospheric heat in the outdoor heat exchanger 47. With this simultaneous heat absorption from the two heat sources, the outdoor heat exchanger 47 is effectively utilized. Compared with a singular operation of the coolant heater 43, the cooperative operation of the coolant heater 43 and the heat pump (the outdoor heat exchanger 47) can reduce the sizes of the coolant heater 43 and the apparatus as a whole for a portion of heat provided by the heat pump.

When providing a small heating capacity, the two-way valve 53 is closed to stop the operation of the coolant heater 43, and only the heat pump operation using the outdoor heat exchanger 47 is carried out. At this time, the two-way valve 73 on the upstream side of the two-cylinder compressor 17 is closed. The coolant exiting from the outdoor heat exchanger 47, therefore, does not flow to the piping 55 but flows only to the first cylinder 29 of the compressor 17 through the piping 61.

This realizes a very small heating capacity compared with that achieved by the two flows of coolant circulated through the first and second cylinders 29 and 31 of the compressor 17, and expands an overall variable width of heating capacity of the air-conditioning apparatus.

With this extended variable width covering a low capacity heating operation, the coolant heater 43 is not required to be repeatedly turned ON and OFF even for a small heating load. As a result, a user may enjoy comfortable air-conditioning. Since the coolant heater 43 can be continuously operated without the ON/OFF operation, a running cost is reduced compared with the ON/OFF operation. Unlike the ON/OFF operation, the continuous operation does not deteriorate the durability of the burner 51, nor condense combustion gases in the heat exchanger 49 of the coolant heater 43, so that the heat exchanger 49 may not be corroded due to high acidity of condensed combustion gases.

When providing a low heating capacity, the two-way valves 53 and 73 are both closed. During this period, the heat exchanger 49 of the coolant heater 43 is substantially vacuumed by the second cylinder 31 of the compressor 17, so that no coolant may be condensed and held in the heat exchanger 49. Also, since the outdoor heat exchanger 47 is always used, there is no risk of holding coolant in the outdoor heat exchanger 47.

Since no coolant is held in the heat exchanger 49 and outdoor heat exchanger 47, no shortage of the coolant occurs in the refrigerating cycle. Since there is no need of collecting leaked coolant, it is not necessary to stop the heating operation to collect the coolant. In addition, there is no need to collect the coolant when starting the heating operation, so that the start-up of the heating operation will never be delayed due to collecting the coolant.

When kerosene is used as a fuel for the coolant heater 43, the kerosene is usually stored in a tank. When the kerosene in the tank is completely consumed, the coolant heater 43 is stopped even if a required heating capacity is high, and only the outdoor heat exchanger 47 is operated to continue the heating operation.

For carrying out a cooling operation, coolant from the four-way valve 19 flows as indicated with dotted arrow marks. During the cooling operation, the two-way valve 53 on the upstream side of the coolant heater 43 is closed, and the two-way valve 73 on the upstream side of the two-cylinder compressor 17 is opened. The coolant exiting from the four-way valve 19 is sequentially circulated through the outdoor heat exchanger 47, expansion valve 57, indoor heat exchanger 21, four-way valve 19, and the two-cylinder compressor 17.

Since the two-way valve 73 on the upstream side of the compressor 17 is open, the coolant exiting from the four-way valve 19 flows through both the piping 61 and 55, and the first and second cylinders 29 and 31 of the compressor 17 simultaneously draw the coolant to improve a cooling capacity.

Fig. 11 shows the eighth embodiment of the invention. In the figure, the same parts as those of the seventh embodiment are represented with like reference marks. Only essential parts of the eighth embodiment will be explained.

Instead of the two-way valve 73 on the upstream side of the compressor 17 of the seventh embodiment, the eighth embodiment employs a flow control valve 77, which is an electrically driven expansion valve whose opening is varied by a pulse motor valve. By changing the opening of the flow control valve 77, a cooling capacity for a cooling operation can be widely varied.

Figs. 12 and 13 are a block diagram and a flowchart showing an example of heating operation control of the refrigerating cycle of Fig. 10.

To achieve this control, the refrigerating cycle of Fig. 10 is provided with an ambient temperature sensor 80 and a controller 81 comprising, for example, a microcomputer. When an ambient temperature detected by the ambient temperature sensor 80 is smaller than a predetermined value T, the controller 81 simultaneously carried out the coolant heating operation and heat pump operation, and when the ambient temperature is greater than the predetermined value T, only the heat pump operation.

As is known, the efficiency of the heat pump operation that absorbs atmospheric heat decreases as an ambient temperature decreases. When the ambient temperature is high, the heat pump operation demonstrates very good efficiency. The running cost of the heat pump will be lower than that of the coolant heater 43 depending on a fuel used for the coolant heater 43.

In consideration of these facts, the two-way valve 53 is opened and the two-way valve 73 is closed when the ambient temperature is smaller than the predetermined value T, as shown in Fig. 13, to operate the coolant heater 43 to simultaneously achieve the coolant heating operation and heat pump operation, thereby preventing lowering the heating capacity.

When the ambient temperature is greater than the predetermined value T, the two-way valve 53 is closed while the two-way valve 73 is opened, to stop the coolant heater 43 to carry out only the heat pump operation for achieving the heating operation. When a required heating capacity is small during the heat pump operation, the two-way valve 73 is closed to use only the first cylinder 29 of the compressor 17.

Figs. 14 and 15 are a block diagram and a flowchart showing another example of heating control.

To achieve this control, the refrigerating cycle of Fig. 10 is provided with a fuel sensor 86 for detecting a shortage of fuel such a s kerosene and a propane gas, and a controller 90 comprising, for example, a microcomputer serving as control means for receiving an output signal of the fuel sensor 86 and controlling the coolant heater 43 and two-way valves 53 and 73.

When a fuel for the coolant heater 43 is entirely consumed, the two-way valve 53 is closed and the two-way valve 73 opened to stop the coolant heater 43 and carry out the heat pump operation through the first and second cylinders 29 and 31 of the compressor 17, irrespective of an ambient temperature. In this way, even if the fuel for the coolant heater 43 runs out, the heating operation is continued, though the heating capacity of the heat pump operation may not be sufficient if the ambient temperature is low to require a large heating capacity.

Fig. 16 shows an example of cooling operation control.

When a required cooling capacity is large in the refrigerating cycle of Fig. 10, the two-way valve 73 is opened to use the first and second cylinders 29 and 31 of the compressor 17. When the required cooling capacity is small, the two-way valve 73 is closed to use only the first cylinder 29 of the compressor 17.

Fig. 17 shows an essential part of a two-cylinder compressor 87 according to the ninth embodiment of the invention.

The compressor 87 substitutes for the two-cylinder compressor 17 of the seventh embodiment of Fig. 10. What is different from the two-cylinder compressor 17 is that a first cylinder 29 connected to the low pressure piping 61 has a smaller volume, while a second cylinder 31 connected to the high pressure piping 55 for the coolant heater 43 has a larger volume. A suction cup 93 is arranged in the piping 61.

When the coolant heating operation and heat pump operation are simultaneously carried out to provide a large heating capacity, evaporated coolant from the coolant heater 43 has high pressure because it is not contracted, and is fed into the second cylinder 31 of larger volume. On the other hand, evaporated coolant from the outdoor heat exchanger 47 has low pressure and is fed into the first cylinder 29 of smaller volume.

The high-pressure evaporated coolant in the second cylinder 31 is slightly compressed and discharged into a compressor casing 95. The low-pressure evaporated coolant in the first cylinder 29 is compressed to high pressure and discharged into the compressor casing 95.

A pressure ratio of suction side to discharge side, i.e., a compression ratio of the first cylinder 29 of smaller volume is larger than that of the second cylinder 31 of larger volume. Namely, in consideration of the compression ratio, torque of the first cylinder may be larger than that of the second cylinder 31. the quantity of vapor to be compressed in the first cylinder 29, however, is smaller than that in the second cylinder 31. Accordingly, by properly adjusting the volumes of the cylinders 29 and 31, the torque of both the cylinders may be equalized to each other to provide balanced rotations and reduce vibration and noise. This arrangement may remarkably reduce the vibration and noise of an outdoor unit in which the compressor is disposed.

As explained above, the invention simultaneously carries out the coolant heating operation and heat pump operation when a required heating capacity is high, and only the heat pump operation when the required heating capacity is low. During the low heating capacity operation, the invention closes the second open/close valve, thereby drawing coolant into one of the cylinders of the compressor to secure the low heating capacity. This realizes a very wide variable width of capacity, and provides a user with comfortable air-conditioning.

Fig. 18 is a schematic view showing a refrigerating cycle of an air-conditioning apparatus according to the tenth embodiment of the invention.

The air-conditioning apparatus comprises, in coolant flowing order during a heating operation, a two-cylinder compressor 17, a four-way valve 19 serving as a directional control valve, and an indoor heat exchanger 21. The compressor 17 has two suction ports 23 and 25, a discharge port 27, and simultaneously driven first and second cylinders 29 and 31. The discharge port 27 of the compressor 17 is connected to the four-way valve 19 through piping 33, and the four-way valve 19 is connected to the indoor heat exchanger 21 through piping 35.

Coolant exiting from the indoor heat exchanger 21 is passed through piping 37 and divided into two flows through a branch 39. One of the two flows is guided to a coolant heater 43 through piping 41, and the other flow to an outdoor heat exchanger 47 through piping 45.

The coolant heater 43 comprises a coolant heater heat exchanger 49 and a burner 51.

An expansion valve 57 is disposed in the piping 45, to decrease the pressure of coolant so that the coolant can absorb atmospheric heat during a heat pump operation.

A two-way valve 53 serving as a first open/close valve is disposed in the piping 41 to the coolant heater 43. The two-way valve 53 closes the coolant path to the coolant heater 43 during a heating operation that is carried out only with the heat pump operation without using the coolant heater 43, or during a cooling operation that does not require the coolant heater 43.

Coolant exiting from the coolant heater 43 flows through piping 55 connected to the suction port 25 of the two-cylinder compressor 17.

The outdoor heat exchanger 47 is connected to the four-way valve 19 through piping 59, and the four-way valve 19 is connected to the suction port 23 of the compressor 17 through piping 61.

The piping 55 for connecting the coolant heater 43 with the compressor 17 is connected to piping 45a for connecting the outdoor heat exchanger 47 with the expansion valve 57, through bypass piping 163 in which a second open/close valve 165 is disposed.

When a large heating capacity is required, the coolant heating operation and heat pump operation are simultaneously carried out. If the outdoor heat exchanger 47 is frosted due to ambient conditions during the heating operation, a defrosting signal is provided to open the two-way valve 165. As a result, part of high-temperature evaporated coolant from the coolant heater 43 flows to the piping 45a through the bypass piping 163, to defrost the outdoor heat exchanger 47.

Since the defrosting operation is carried out without changing the four-way valve 19, the remaining part of the high temperature coolant from the coolant heater 43 is continuously fed to the indoor heat exchanger 21 through the compressor 17, thereby continuing the heating operation to provide a user with comfortable air-conditioning.

Before opening the two-way valve 165 for the defrosting operation, a thermal output of the coolant heater 43 may be slightly increased to prevent lowering the heating capacity during the defrosting operation.

When a low heating capacity is required, only the heat pump operation is carried out. In this case, the two-way valve 53 on the upstream side of the coolant heater 43 is closed to stop the coolant heater 43. When the defrosting signal is provided during this period, the two-way valve 53 is opened to activate the coolant heater 43. At the same time, the two-way valve 165 is opened to defrost the outdoor heat exchanger 47, similar to the above explanation. Before opening the two-way valve 53, the coolant heater 43 may be activated in advance to a preheated state. This may quickly defrost the outdoor heat exchanger 47 and reduce a risk of causing a liquified coolant to flow back into the compressor 17.

Fig. 19 shows the eleventh embodiment of the invention. In the figure, the same parts as those of the tenth embodiment of Fig. 18 are represented with like reference marks, and only essential parts of the eleventh embodiment will be explained.

The eleventh embodiment is not provided with the bypass piping 163 and two-way valve 165 of the tenth embodiment. Instead, the piping 27 on the discharge side of the compressor 17 is connected through bypass piping 167 with the piping 45a for connecting the outdoor heat exchanger 47 with the expansion valve 57. A two-way valve 169 serving as a second open/close valve is disposed in the bypass piping 167. The operation of the two-way valve 169 is the same as that of the two-way valve 165 of the tenth embodiment. Part of high-temperature evaporated coolant passing through the piping 27 on the discharge side of the compressor 17 is sent to the outdoor heat exchanger 47 through the bypass piping 167 to defrost the outdoor heat exchanger 47.

Fig. 20 shows the twelfth embodiment of the invention.

This embodiment is characterized by a capillary tube 171 disposed in the piping 163 between the two-way valve 165 and the outdoor heat exchanger 47. The capillary tube 171 serves as a flow resistance member for adjusting the flow rate of the defrosting high-temperature evaporated coolant.

Since the capillary tube 171 secures a proper quantity of defrosting evaporated coolant, the total quantity of circulated coolant can be reduced, the coolant can be completely evaporated in the coolant heater 43, and a backward flow of coolant into the compressor 17 is prevented. The capillary tube 171 may be disposed in the bypass piping 163 between the two-way valve 165 and the coolant heater 43.

Fig. 21 shows the thirteenth embodiment of the invention.

This embodiment is characterized by a capillary tube 173 serving as a flow resistance member disposed in the bypass piping 167 between the two-way valve 169 and the outdoor heat exchanger 47 of the eleventh embodiment of Fig. 19. The capillary tube 173 secures a proper amount of coolant flowing to a heating circuit, i.e., a main circuit during a defrosting operation. As a result, coolant exiting from the coolant heater 43 may have a proper degree of superheat without decreasing the heating capacity of the coolant heater 43, thereby minimizing an influence of the defrosting operation on the main circuit. The capillary tube 173 may be arranged in the bypass piping 167 between the compressor 17 and the two-way valve 169.

Fig. 22 shows the fourteenth embodiment of the invention.

This embodiment does not have the bypass piping 163 and two-way valve 165 of the tenth embodiment of Fig. 18. Instead, bypass piping 177 for bypassing the expansion valve 57 is arranged. The bypass piping 177 involves a two-way valve 179 as a second open/close valve, and a heat accumulator 181 as heat accumulating means.

When the outdoor heat exchanger 47 is frosted during the simultaneous coolant heating and heat pump operations, or during the heat pump operation alone, the two-way valve 179 is opened to guide liquified coolant from the indoor heat exchanger 21 to the heat accumulator 181 through the bypass piping 177. Heat accumulated in the heat accumulator 181 evaporates the liquid coolant, and the evaporated coolant defrosts the outdoor heat exchanger 47.

The heat accumulator 181 accumulates heat by, for example, effectively using a combustion exhaust gas from the coolant heater 43, as shown in Fig. 23.

In Fig. 23, the heat accumulator 181 comprises heat transfer fins 183 and heat accumulating material 185 such as paraffin. The heat accumulator 181 is connected to the coolant heater 43 through a combustion gas exhaust pipe 85. Numeral 87 denotes a blower for feeding combustion air to the burner 51, and 89 coolant piping in the coolant heater 43. With this arrangement, the heat accumulator 181 accumulates heat from an exhaust during the operation of the coolant heater 43.

Fig. 24 shows another heat source for the heat accumulator 181. In the figure, a heat accumulating material 191 is disposed on a wall of the coolant heater 43, to use heat radiation from the coolant heater 43 as a heat source. Alternatively, a wall of the compressor 17 may be used as a heat source during a heating operation.

As explained above, the invention defrosts the outdoor heat exchanger during a heating operation by opening the second open/close valve without operating the directional control valve, and by feeding high-temperature evaporated coolant to the outdoor heat exchanger. Namely, the invention carried out the defrosting operation without stopping the heating operation, thereby providing a user with comfortable air-conditioning.

## Claims

1. An air-conditioning apparatus comprising:

a compressor having two suction ports, a discharge port, and two simultaneously operating cylinders corresponding to the two suction ports;

an indoor heat exchanger;

an outdoor heat exchanger;

a directional control valve for connecting said indoor and outdoor heat exchangers with the discharge port and one of the suction ports of said compressor;

an expansion valve disposed in piping for connecting said indoor heat exchanger with said outdoor heat exchanger;

a coolant heater disposed between the piping and the other suction port of said compressor; and

an open/close valve means disposed between said coolant heater and the piping.

2. The air-conditioning apparatus as claimed in claim 1, wherein said open/close valve means is a flow control valve.

3. The air-conditioning apparatus as claimed in claim 1, wherein said expansion valve is made of a capillary tube.

4. The air-conditioning apparatus as claimed in claim 1, wherein said open/close valve means is a two-way valve.

5. The air-conditioning apparatus as claimed in claim 2, further comprising:
a first temperature sensor disposed in piping on the outlet side of said coolant heater, for detecting the temperature of coolant;
a second temperature sensor disposed in a heat exchanger of said coolant heater, for detecting the evaporation temperature of the coolant; and
a controller involving a microcomputer for receiving values detected by the temperature sensors, calculating a proper degree of superheat of the coolant according to the received values, and adjusting the opening of the flow control valve according to the calculated degree of superheat.

6. The air-conditioning apparatus as claimed in claim 1, wherein said expansion valve is a temperature expansion valve.

7. The air-conditioning apparatus as claimed in claim 6, further comprising:
a temperature sensor and a pressure sensor disposed in piping for connecting said outdoor heat exchanger with one of the suction ports of said compressor; and
a controller involving a microcomputer for receiving signals provided by the temperature and pressure sensors, and controlling the opening of the temperature expansion valve such that the degree of heat of coolant heated in said outdoor heat exchanger will be constant at the suction port.

8. An air-conditioning apparatus comprising:
a compressor having two suction ports, a discharge port, and two simultaneously operating cylinders corresponding to the two suction ports;
an indoor heat exchanger;
an outdoor heat exchanger;
a directional control valve for connecting said indoor and outdoor heat exchangers with the discharge port and one of the suction ports of said compressor;
an expansion valve disposed in piping for connecting said indoor heat exchanger with said outdoor heat exchanger;
a coolant heater disposed between a part of the piping between said expansion valve and said indoor heat exchanger and the other suction ports of said compressor;
an open/close valve means disposed between said coolant heater and the piping;
a flow control valve disposed between a connection of said open/close valve means to the piping and said indoor heat exchanger; and
bypassing open/close valve means disposed in parallel with said expansion valve.

9. The air-conditioning apparatus as claimed in claim 8, wherein said expansion valve is made of a capillary tube.

10. The air-conditioning apparatus as claimed in claim 9, further comprising:
a first temperature sensor disposed in piping on the outlet side of said coolant heater, for detecting the temperature of coolant;
a second temperature sensor disposed in a heat exchanger of said coolant heater, for detecting the evaporation temperature of the coolant; and
a controller involving a microcomputer for receiving values detected by the temperature sensors, calculating a proper degree to superheat of the coolant according to the received values, and adjusting the opening of said flow control valve according to the calculated degree of superheat.

11. The air-conditioning apparatus as claimed in claim 8, wherein said expansion valve is a temperature expansion valve.

12. The air-conditioning apparatus as claimed in claim 11, further comprising:
a first temperature sensor disposed in piping on the outlet side of said coolant heater, for detecting the temperature of coolant;
a second temperature sensor disposed in a heat exchanger of said coolant heater, for detecting the evaporation temperature of the coolant;
a first controller involving a microcomputer for receiving values detected by the temperature sensors, calculating a proper degree of superheat of the coolant according to the received values, and adjusting the opening of said flow control valve according to the calculated degree of superheat;
a third temperature sensor and a pressure sensor disposed in piping for connecting said outdoor heat exchanger with one of the suction ports of said compressor; and
a second controller involving a microcomputer for receiving signals from said third temperature sensor and pressure sensor, and controlling the opening of the temperature expansion valve such that the degree of heat of coolant heated in said outdoor heat exchanger will be constant at the suction port.

13. The air-conditioning apparatus as claimed in claim 2, further comprising:

a first temperature sensor disposed in piping on the outlet side of said coolant heater, for detecting the temperature of coolant;

a second temperature sensor disposed in a heat exchanger of said coolant heater, for detecting the evaporation temperature of the coolant;

a first controller involving a microcomputer for receiving values detected by the temperature sensors, calculating a proper degree of superheat of the coolant according to the received values, and adjusting the opening of said flow control valve according to the calculated degree of superheat;

said expansion valve being a second flow control valve;

a third temperature sensor disposed in piping for connecting said outdoor heat exchanger with one of the suction ports of said compressor, for detecting the inlet temperature of the suction port;

a fourth temperature sensor for detecting an evaporation temperature in said outdoor heat exchanger;

a fifth temperature sensor for detecting the temperature of said indoor heat exchanger; and

a second controller for receiving values detected by said third, fourth and fifth temperature sensors, calculating the degree of superheat of coolant in said outdoor heat exchanger during a heating operation and the degree of superheat of coolant in said indoor heat exchanger during a cooling operation according to two of the temperatures detected by the temperature sensors, and controlling the opening of the second flow control valve according to the calculated degree of superheat.

14. An air-conditioning apparatus comprising:

a compressor having two suction ports, a discharge port, and two simultaneously operating cylinders corresponding to the two suction ports;

an indoor heat exchanger;

an outdoor heat exchanger;

a directional control valve for connecting said indoor and outdoor heat exchangers with the discharge port and one of the suction ports of said compressor;

an expansion valve disposed in piping for connecting said indoor heat exchanger with said outdoor heat exchanger;

a coolant heater disposed between the piping and the other suction port of said compressor;

a first open/close valve means disposed between said coolant heater and the piping; and

a second open/close valve means disposed between two systems of piping connected to the two suction ports, respectively.

15. The air-conditioning apparatus as claimed in claim 14, further comprising:

ambient temperature detecting means for detecting an ambient temperature; and

control means for receiving a signal from the ambient temperature detecting means, simultaneously carrying out a coolant heating operation and a heat pump operation using said outdoor heat exchanger when the ambient temperature is smaller than a predetermined value, and carrying out only the heat pump operation using said outdoor heat exchanger when the ambient temperature is greater than the predetermined value.

16. The air-conditioning apparatus as claimed in claim 14, wherein each of said first and second open/close valve means is a two-way valve.

17. The air-conditioning apparatus as claimed in claim 14, wherein said first open/close valve means is a two-way valve, and said second open/close valve means is a flow control valve.

18. An air-conditioning apparatus comprising:

a compressor having two suction ports, a discharge port, and two simultaneously operating cylinders corresponding to the two suction ports;

an indoor heat exchanger;

an outdoor heat exchanger;

a directional control valve for connecting said indoor and outdoor heat exchangers with the discharge port and one of the suction ports of said compressor;

an expansion valve disposed in piping for connecting said indoor heat exchanger with said outdoor heat exchanger;

a coolant heater disposed between the piping and the other suction port of said compressor;

a first open/close valve means disposed between said coolant heater and the piping; and

a second open/close valve means disposed in bypass piping for connecting piping connected to the other suction port with the piping connected to the expansion valve side of said outdoor heat exchanger.

19. The air-conditioning apparatus as claimed in claim 18, wherein said open/close valve means is a two-way valve.

20. The air-conditioning apparatus as claimed in claim 19, further comprising a capillary tube disposed in said bypass piping in series with the two-way valve.

21. An air-conditioning apparatus comprising:

a compressor having two suction ports, a discharge port, and two simultaneously operating cylinders corresponding to the two suction ports;

an indoor heat exchanger;

an outdoor heat exchanger;

a directional control valve for connecting said indoor and outdoor heat exchangers with the discharge port and one of the suction ports of said compressor;

an expansion valve disposed in piping for connecting said indoor heat exchanger with said outdoor heat exchanger;

a coolant heater disposed between the piping and the other suction port of said compressor;

a first open/close valve means disposed between said coolant heater and the piping; and

a second open/close valve means disposed in piping for connecting piping connected to the discharge port of said compressor with the piping connected to the expansion valve side of said outdoor heat exchanger.

22. The air-conditioning apparatus as claimed in claim 21, wherein each of said first and second open/close valve means is a two-way valve.

23. The air-conditioning apparatus as claimed in claim 22, further comprising a capillary tube disposed in said bypass piping in series with the two-way valve.

24. An air-conditioning apparatus comprising:

a compressor having two suction ports, a discharge port, and two simultaneously operating cylinders corresponding to the two suction ports;

an indoor heat exchanger;

an outdoor heat exchanger;

a directional control valve for connecting said indoor and outdoor heat exchangers with the discharge port and one of the suction ports of said compressor;

an expansion valve disposed in piping for connecting said indoor heat exchanger with said outdoor heat exchanger;

a coolant heater disposed between an intermediate position in the piping between said indoor heat exchanger and said expansion valve and the other suction port of said compressor;

a first open/close valve means disposed between said coolant heater and the piping; and

a second open/close valve means and heat accumulating means disposed in bypass piping for bypassing said expansion valve.

# F I G . 1

COOLANT HEATING CYCLE

HEAT PUMP CYCLE

PRESSURE

ENTHALPY

# FIG.2

→ HEATING

- - → COOLING

# FIG.3

HEATING
COOLING

# F I G . 4

EP 0 492 168 A2

# FIG.5

→ HEATING

--→ COOLING

# FIG.6

→ HEATING

---→ COOLING

# FIG.7

→ HEATING

- - → COOLING

# FIG.8

→ HEATING

--→ COOLING

# F I G.9

# F I G.10

→ HEATING

---→ COOLING

# F I G.11

————→ HEATING

- - - -→ COOLING

# FIG.12

AMBIENT TEMPERATURE SENSOR ⌐80

CONTROLLER ⌐81

COOLANT HEATER ⌐43

TWO-WAY VALVE ⌐53

TWO-WAY VALVE ⌐73

# FIG.13

HEATING OPERATION

AMBIENT TEMPERATURE < T ?

NO

YES

SIMULTANEOUS COOLANT HEATING AND HEAT PUMP OPERATIONS

- - - - - - - - - - - -

OPEN TWO-WAY VALVE 53
CLOSE TWO-WAY VALVE 73
TURN ON COOLANT HEATER

HEAT PUMP OPERATION (TWO-CYLINDER OPERATION)

- - - - - - - - - - - -

CLOSE TWO-WAY VALVE 53
OPEN TWO-WAY VALVE 73
TURN OFF COOLANT HEATER

# FIG.14

| | | |
|---|---|---|
| FUEL SENSOR ⌐86 | CONTROLLER ⌐90 | COOLANT HEATER ⌐43 |

TWO-WAY VALVE ⌐53

TWO-WAY VALVE ⌐73

# FIG.15

HEATING OPERATION

ANY FUEL ?

NO

YES

SIMULTANEOUS COOLANT HEATING AND HEAT PUMP OPERATIONS

- - - - - - - - - - - - - - - -

OPEN TWO-WAY VALVE 53
CLOSE TWO-WAY VALVE 73
TURN ON COOLANT HEATER

HEAT PUMP OPERATION

- - - - - - - - - - - - - - - -

CLOSE TWO-WAY VALVE 53
OPEN TWO-WAY VALVE 73
TURN OFF COOLANT HEATER

# FIG.16

```
        ┌─────────────────┐
        │ COOLING         │
        │ OPERATION       │
        └────────┬────────┘
                 │
             ╱───┴───╲
           ╱    IS     ╲          NO
        ╱  REQUIRED COOLING ╲──────────────┐
         ╲  CAPACITY LARGE ? ╱              │
           ╲             ╱                  │
             ╲───┬───╱                      │
            YES  │                          │
                 │                          │
   ┌─────────────────────────┐   ┌─────────────────────────┐
   │ OPERATION WITH FIRST AND│   │ OPERATION WITH SECOND   │
   │ SECOND CYLINDERS        │   │ CYLINDER                │
   │ ─────────────────────── │   │ ─────────────────────── │
   │ CLOSE TWO-WAY VALVE 53  │   │ CLOSE TWO-WAY VALVE 53  │
   │ OPEN TWO-WAY VALVE 73   │   │ CLOSE TWO-WAY VALVE 73  │
   └─────────────────────────┘   └─────────────────────────┘
```

# F I G.17

LOW-PRESSURE
EVAPORATED COOLANT

33

61

93

95

HIGH-PRESSURE
EVAPORATED
COOLANT

55

31  87  29

EP 0 492 168 A2

# F I G.18

HEATING
COOLING
DEFROSTING

FIG.19

HEATING
COOLING
DEFROSTING

# FIG.20

→ HEATING

--→ COOLING

─○→ DEFROSTING

FIG.21

HEATING

COOLING

DEFROSTING

# FIG.22

# FIG.23

EP 0 492 168 A2

# FIG.24

EP 0 492 168 A2